**Europäisches Patentamt**

**European Patent Office**

**Office européen des brevets**

(11) Veröffentlichungsnummer: **0 199 975 B1**

# EUROPÄISCHE PATENTSCHRIFT

(45) Veröffentlichungstag der Patentschrift: **22.05.91**

(21) Anmeldenummer: **86103883.4**

(22) Anmeldetag: **21.03.86**

(51) Int. Cl.⁵: **C09C  1/24**, C08K 3/22, C04B 33/14, C04B 33/30, C09D 17/00

(54) **Eisenoxidrotpigmente mit verbesserten koloristischen Eigenschaften, Verfahren zu deren Herstellung sowie ihre Verwendung.**

(30) Priorität: **03.04.85 DE 3512124**

(43) Veröffentlichungstag der Anmeldung:
**10.12.86 Patentblatt  86/45**

(45) Bekanntmachung des Hinweises auf die
Patenterteilung:
**22.05.91 Patentblatt  91/21**

(84) Benannte Vertragsstaaten:
**DE FR GB IT NL**

(56) Entgegenhaltungen:
**EP-A- 0 221 473**
**FR-A- 2 075 544**

**CHEMICAL ABSTRACTS, Band 85, Nr. 16, 18. Oktober 1976, Seite 91, Zusammenfassung Nr. 110198, Columbus, Ohio, US; & JP-A-76 66 320 (TONE INDUSTRY CO., LTD) 08-06-1976**

(73) Patentinhaber: **BAYER AG**

**W-5090 Leverkusen 1 Bayerwerk(DE)**

(72) Erfinder: **Burow, Wilfried, Dr.**
**Sollbrüggenstrasse 33**
**W-4150 Krefeld 1(DE)**
Erfinder: **Brunn, Horst, Dr.**
**Doerperhofstrasse 39**
**W-4150 Krefeld 1(DE)**
Erfinder: **Kresse, Peter, Dr.**
**Deswatinesstrasse 67**
**W-4150 Krefeld 1(DE)**
Erfinder: **Sander, Hans, Dr.**
**Deswatinesstrasse 79**
**W-4150 Krefeld 1(DE)**

**Beschreibung**

Die vorliegende Erfindung betrifft neue Eisenoxidrotpigmente mit verbesserten koloristischen Eigenschaften, Verfahren zur Herstellung dieser Pigmente sowie ihre Verwendung.

Eisenoxidrotpigmente werden in der Baustoff-, Kunststoff-und Lackindustrie eingesetzt. Insbesondere für die Anwendung in Lacksystemen sind farbreine Eisenoxidrotpigmente mit ausgeprägtem Rotton erwünscht. Der Farbton des Pigments wird im Lack gemäß DIN 6174 (äquivalent ISO/DIN 7724, 1 - 3 drafts) definiert. Als Maß für die Farbreinheit des Eisenoxidrotpigmentes gilt der im Lack ermittelte Wert C* der Sättigung, als Maß für den Rotton der im Lack bestimmte Rotanteil a*.

Beim Einarbeiten eines Eisenoxidrotpigmentes in verschiedene Bindemittelsysteme beobachtet man, daß die Sättigung C* und der Rotanteil a* der Pigmente in zahlreichen Bindemittelsystemen abfällt. Die Pigmentanreibungen in solchen Bindemittelsystemen sind somit erheblich ungesättigter.

Unabhängig vom Herstellverfahren für Eisenoxidrotpigmente (z.B. Abrösten von Eisensulfat / Verglühen von $\alpha$-FeCOH oder $Fe_3O_4$, die auf dem Fällungsweg oder Anilinweg erhalten wurden / Herstellung von Direktrot; Ullmann, Band 18, S. 601 - 603, 4. Auflage, Weinheim, 1979) verlieren die Pigmente in zahlreichen Bindemittelsystemen an Farbreinheit.

Das Ziel der vorliegenen Erfindung ist es somit, Eisenoxidrotpigmente zur Verfügung zu stellen, die die beschriebenen Nachteile nicht aufweisen.

Überraschenderweise wurde nun gefunden, daß die Forderungen von solchen Eisenoxidrotpingmenten erfüllt werden, deren Wert für den isoelektrischen Punkt (icp) größer als 7 ist. Die isoelektrischen Punkte handelsüblicher Eisenoxidpingmente weisen Werte von kleiner als 7 auf (s. Tab. 4).

Die isoelektrischen Punkte von Pigmenten lassen sich durch elektrophoretische Messungen bestimmen (Thomas M. Riddick, Control of Colloid stability through Zeta Potential, 1968, New York).

Die Messung wird dabei an hochverdünnten Lösungen (0,001 g Pigment in 50 ml Lösung von $10^{-3}$ mol $dm^{-3}$ $KNO_3$) ausgeführt. Hierzu wird am Meßgerät PEN KEM-System 3000 der Firma PEN KEM Inc., Bedford Hills New York, eine Messung der elektrophoretischen Beweglichkeit $\mu$/s per V/cm im Bereich zwischen pH 1 und 14 ausgeführt, wobei der pH der Lösung jeweils mit $HNO_3$, NaOH eingestellt wird. Die elektrophoretische Beweglichkeit wird graphisch als Funktion der pH-Wertes aufgetragen. Der Schnittpunkt dieser Kurve mit der pH-Achse wird als isoelektrischer Punkt bezeichnet.

Es wurde weiterhin gefunden, daß solche Eisenoxidrotpigmente isoelektrische Punkte von oberhalb 7 aufweisen, deren Pigmentoberflächen Verbindungen der Elemente aus der Gruppe Mg, Zn, Al, La, Y, Zr, Sn und Ca enthalten. Aus koloristischen Gründen sollten diese naturgemäß farblos sein. Gegenstand dieser Erfindung sind somit Eisenoxidrotpigmente mit verbesserten koloristischen Eigenschaften, wobei der isoelektrische Punkt der Pigmente größer als 7, besonders bevorzugt größer als 8, ist, dadurch gekennzeichnet, daß sie eine Beschichtung aufweisen, die aus farblosen Verbindungen einer oder mehrerer Elemente der Gruppe Mg, Zn, Al, La, Y, Zr, Sn, Ca besteht und die Menge der Elemente 0,5 bis 10 Mol-%, bezogen auf den Gesamteisengehalt der Eisenoxidrotpigmente, beträgt. Ebenso sind durch dotierte Pigmente denkbar, eine Beschichtung ist aber aus Kostengründen zu bevorzugen.

Diese erfindungsgemäßen Pigmente zeigen in allen Bindemitteln günstige koloristische Eigenschaften. Für die Beschichtung sind natürlich leicht verfügbare Verbindungen vorteilhaft. Daber sind besonders bevorzugte Eisenoxidrotpigmente solche, deren Beschichtung aus schwerlöslichen Verbindungen des Mg, Ca, Al und/oder Zn besteht.

Es ist unerheblich, welcher Natur das beschichtete Eisenoxidrotpigment ist. ob es z. B. ein abgeröstetes oder verglühtes Eisenoxidrot ist. In jedem Falle zeigen die erfindungsgemäß beschichteten Eisenoxidrotpigmente die erforderlichen günstigen koloristischen Eigenschaften in allen Bindemittelsystemen.

Vorzugsweise sind die genannten Elemente in Mengen von 0,5 bis 10 Mol-% wirksam. In ihrer bevorzugten Ausführungsform beträgt die Menge der Elemente der Gruppe Mg, Zn, Al, La, Y, Zr, Sn, Ca 0,5 bis 10 Mol-%, bezogen auf den Gesamteisengehalt der Eisenoxidrotpigmente.

Aus Chemical Abstracts, Band 85, Nr. 16, 18. Oktober 1976, Seite 91, Zusammenfassung Nr. 110 198, Columbus Ohio, USA gehen Eisenoxidgelbpigmente hervor, die entweder mit einer Fällung von Aluminiumhydroxid versehen werden oder mit Aluminiumhydroxid abgemischt werden, um einen verbesserten Glanz in bestimmten Lacksystemen zu erzeugen.

In der FR-A-2 075 544 wird ein Verfahren zur Hydrothermalbehandlung von oxidischen Pigmenten mit Hydroxiden, Oxidhydraten, Phosphaten und basischen Sulfaten beschrieben. Nach diesem Verfahren werden massedotierte Pigmente erhalten, also keine Pigmente mit einer Beschichtung.

Gegenstand der vorliegenden Erfindung sind auch Verfahren zur Herstellung der erfindungsgemäßen Pigmente.

Die Beschichtung der Eisenoxidpigmente kann aus einer Einzelkomponente oder aus einer gemischten Verbindung aus der Gruppe Mg, Zn, Al, Ca, La, Y, Zr, Sn bestehen. Zur Beschichtung können alle Verfahren angewendet werden, die zu einem schwerlöslichen Überzug der genannten Verbindungen auf Eisenoxidpigmenten führen. Dazu gehören Aufmahlen, Auffällen oder Aufsprühen der genannten Verbindungen auf Eisenoxidpigmente.

Die Herstellung der erfindungsgemäßen Pigmente geschieht vorteilhafterweise so, daß auf Eisenoxidrotpigmenten eine Beschichtung farbloser Verbindungen eines oder mehrerer Elemente aus der Gruppe Mg, Zn, Al, La, Y, Zr, Sn, Ca durch Aufsprühen, Aufmahlen und/oder Auffällen so vorgenommen wird, daß der Gehalt an Elementen der Gruppe Mg, Zn, La, Y, Zr, Sn, Ca 0,5 bis 10 Mol-%, bezogen auf den Gesamteisengehalt der Eisenoxidrotpigmente, beträgt.

Besonders einfach gelingt die Herstellung dadurch, daß die Beschichtung durch Trocken- oder Naßmahlung aufgebracht wird. Soll die Beschichtung durch Auffällen erfolgen, so geht man zweckmäßigerweise von wasserlöslichen Mg-, Zn-, Al-, Ca-, La-, Y-, Zr-, Sn-Verbindungen aus, die in wäßriger Eisenoxidsuspension auf das Pigment als schwerlösliche Verbindung aufgefällt werden, beispielsweise als Oxid oder Mischoxid. Die Beschichtung kann auch aus anderen schwer löslichen Verbindungen bestehen, z. B. aus Carbonaten, Phosphaten, Oxidhydroxiden usw., sofern sie den isoelektrischen Punkt des Eisenoxidrotpigmentes in den Bereich > 7 anheben.

Eine weitere Ausgestaltung des erfindungsgemäßen Verfahrens besteht somit darin, daß die Beschichtung durch Auffällen mit zur Bildung schwerlöslicher farbloser Verbindungen erfolgt.

Aufgrund der hervorragenden Eigenschaften eignen sich die erfindungsgemäßen Eisenoxidrotpigmente hervorragend zur Einfärbung von verschiedenen Farbsystemen. Gerade die in allen Bindemitteln vergleichbaren Eigenschaften sind von besonderem Vorteil für das Erreichen farbgleicher Einfärbungen.

Gegenstand dieser Erfindung ist somit auch die Verwendung der erfindungsgemäßen Eisenoxidrotpigmente zur Einfärbung von Lacksystemen, Dispersionen, Kunststoffen und Baustoffen.

Nachfolgend wird die Erfindung beispielhaft beschrieben, wobei hierzu keine Einschränkung der Erfindung auf die Beispiele zu sehen ist.


Beispiel A

Zu einer wäßrigen Suspension von Eisenoxidrot wird eine Lösung I gegeben und unter Rühren bei X°C eine Lösung II in ca. 30 Minuten zudosiert. Nach der Zudosierung der Lösung II wird die Suspension noch 30 Minuten unter Rühren bei X°C gehalten. Das Produkt wird salzfrei gewaschen, getrocknet und gemahlen.

Das im folgenden eingesetzte Bayferrox® 120 N ist ein Handelsprodukt der Bayer AG, ebenso das Bayferrox® 1120 Z, das Pfizer RO 3097 ist ein Handelsprodukt der Fa. Pfizer. Es handelt sich in allen Fällen um Eisenoxidrotpigmente.

Die Beschichtungsverfahren sind den Tabellen 1 und 2 zu entnehmen.

## Tabelle 1

| Beispiel | Eisenoxidrotsuspension | Lösung I | Lösung II | X°C |
|---|---|---|---|---|
| A 1 | 30 kg Bayferrox® 120 N in 100 l Wasser | 12 l $Al_2(SO_4)_3$ Lösung mit 16,94 g $Al/l$ | 12 l Natriumaluminat-lösung mit 68 g/l $Al_2O_3$ und 57,7 g/l $Na_2O$ | 25 |
| A 2 | 30 kg Bayferrox® 120 N in 100 l | 6 l $Al_2(SO_4)_3$ Lösung mit 16,94 g $Al/l$ | 6 l Natriumaluminat-lösung mit 68 g/l $Al_2O_3$ und 57,7 g/l $Na_2O$ | 25 |
| A 3 | 500 g Bayferrox® 120 N in 1 l Wasser | 150 ml Lösung mit 223,7 g/l $Al_2(SO_4)_3$ und 66,53 g/l $ZnSO_4$ | 150 ml 4,75 m NaOH | 25 |
| A 4 | 500 g Bayferrox® 120 N in 1 l Wasser | 150 ml $ZnSO_4$ Lösung mit 198 g/l $ZnSO_4$ | 150 ml 2,47 m NaOH | 25 |
| A 5 | 500 g Bayferrox® 120 N in 1 l Wasser | 150 ml Lösung mit 223,7 g/l $Al_2(SO_4)_3$ und 99,36 g/l $NgSO_4$ | 150 ml 4,75 m NaOH | 25 |
| A 6 | 500 g Bayferrox® 120 N in 1 l Wasser | 150 ml Lösung mit 66,53 g/l $ZnSO_4$ und 49,68 g/l $MgSO_4$ | 150 ml 1,65 m NaOH | 25 |
| A 7 | 500 g Bayferrox® 120 N in 1 l Wasser | 100 ml $AlCl_3$ Lösung mit 16,92 g/l $Al$ | 100 ml Natriumaluminat-lösung mit 69,3 g/l $Al_2O_3$ und 58,8 g/l $Na_2O$ | 80 |
| A 8 | 500 g Eisenoxidrot[1] in 1 l Wasser | 100 ml $Al_2(SO_4)_3^-$ Lösung mit 16,94 g/l $Al$ | 100 ml Natriumaluminat-lösung mit 69,3 g $Al_2O_3/l$ und 58,8 g $Na_2O/l$ | 25 |
| A 9 | 250 g Pfizer RO 3097 in 500 ml Wasser | 73 ml $Al_2(SO_4)_3^-$ Lösung mit 103 g $Al_2O_3/l$ | 93,5 ml 4,75 m NaOH | 25 |
| A 10 | 250 g Bayferrox® 1120 Z in 500 ml Wasser | 73 ml $Al_2(SO_4)_3^-$ Lösung mit 103 g $Al_2O_3/l$ | 93,5 ml 4,75 m NaOH | 25 |

EP 0 199 975 B1

(1) Anmerkung zu Tabelle 1, Beispiel A 8:

Das Eisenoxidrot, Beispiel 8, wurde nach folgendem Verfahren hergestellt: 1000 g Eisensulfathepta-hydrat werden in einem Muffelofen bei 800 °C zer-setzt. Das Produkt wird aufgeschlämmt, gewaschen, getrocknet und erneut bei 825 °C im Muffelofen geglüht und anschließend gemahlen.

Beispiel B

In einer Scheibenschwingmühle werden ein Gemenge von Eisenoxidrot und Zusatzstoff gemahlen.

**Tabelle 2**

| Beispiel | Eisenoxidrot | Zusatzstoffe |
|---|---|---|
| B 1 | 100 g Bayferrox® 120 N | 7,5 g Tonerdehydrat |
| B 2 | 100 g Bayferrox® 120 N | 1 g Ca(OH)$_2$ + 150 ml Wasser |

Die koloristischen Eigenschaften der erfindungsgemäß beschichteten Eisenoxidrotpigmente in Bindemittelsystemen sind der Tabelle 3 zu entnehmen.

Die beschichteten Eisenoxidrotpigmente zeigen in Bindemittelsystemen gegenüber ihren unbeschichteten Vergleichsproben deutlich verbesserte koloristische Eigenschaften, nämlich eine verbesserte Sättigung C* und einen erhöhten Rotanteil a*.

Die Tabelle 3 enthält für zwei Bindemittelsysteme die Verbesserung der beschichteten Pigmente hinsichtlich ihrer Sättigung C* und ihrem Rotton a* gegenüber ihren unbeschichteten Vergleichsproben.

Tabelle 3

Verbesserung der Koloristik von Eisenoxidrotpigmenten

Farbabstand gegen Anreibungen mit unbeschichtetem Pigment
CIELAB C/2 grd          10 % PVK (Pigmentvolumenkonzentration)

| Beispiel | Bindemittelsystem 1 | | Bindemittelsystem 2 | |
|----------|---------|---------|---------|---------|
| | $\triangle c^*$ | $\triangle a^*$ | $\triangle c^*$ | $\triangle a^*$ |
| A 1 | 3,6 | 1,7 | 3,7 | 1,7 |
| A 2 | 3,3 | 1,5 | 1,9 | 0,7 |
| A 3 | 3,5 | 1,8 | 2,7 | 1,3 |
| A 4 | 3,9 | 2,1 | 2,3 | 1,1 |
| A 5 | 3,7 | 2,0 | 2,6 | 1,2 |
| A 6 | 3,6 | 1,9 | 2,1 | 1,0 |
| A 7 | | | 2,2 | 0,9 |
| A 8 | 3,9 | 2,2 | 0,6 | 0,6 |
| A 9 | 0,6 | 0,5 | 0,9 | 0,6 |
| A 10 | 5,9 | 3,3 | 2,9 | 0,9 |
| B 1 | 0,3 | 0,2 | 1,8 | 0,8 |
| B 2 | 2,2 | 1,1 | 0,6 | 0,3 |

Bindemittel 1:

85 % Alkynol® 1565, Handelsprodukt Bayer AG,
Basis: Polyester
15 % Cymel® 303, Handelsprodukt der Cyanamid C.,
Basis: Hexamethoxymethylamin

Bindemittel 2:

75 % Alkydal® R 35, Handelsprodukt Bayer AG,
Basis: kurzöliges Alkydharz
25 % Maprenal® MF 650, Handelsprodukt Hoechst AG,
Basis: Melaminharz.

Tabelle 4:

Isoelektrische Punkte von Eisenoxidrotpigmenten

| Handelsprodukt | Herstellverfahren | Isoelektrischer Punkt (iep) |
|---|---|---|
| Bayferrox 105 M | Verglühen von Eisen-oxidschwarz | 4 |
| Bayferrox 120 | " " " " " | 2 |
| Bayferrox 120 | " " " " " | 2,2 |
| Pfizer R 1599 D | Abrösten von Eisensulfat | 5 |
| Pfizer RO 3097 | Fällung von Direktrot | 5 |

Die Bayferrox-Typen sind Handelsprodukte der Bayer AG, die übrigen beiden solche der Firma Pfizer.

Tabelle 5

Isoelektrische Punkte von erfindungsgemäß beschichteten Eisenoxidrotpigmenten

| Beispiel | Isoelektrischer Punkt (iep) |
|---|---|
| A 1 | 11 |
| A 2 | 8 |
| A 3 | 8,5 |

**Ansprüche**

1. Eisenoxidrotpigmente mit verbesserten koloristischen Eigenschaften, wobei der isoelektrische Punkt der Pigmente größer als 7, besonders bevorzugt größer als 8, ist, dadurch gekennzeichnet, daß sie eine Beschichtung aufweisen, die aus farblosen Verbindungen einer oder mehrerer Elemente der Gruppe Mg, Zn, Al, La, Y, Zr, Sn, Ca besteht und die Menge der Elemente 0,5 bis 10 Mol-%, bezogen auf den Gesamteisengehalt der Eisenoxidrotpigmente, beträgt.

2. Eisenoxidrotpigmente gemäß Anspruch 1, dadurch gekennzeichnet, daß die Beschichtung aus schwerlöslichen Verbindungen des Mg, Ca, Al und/oder Zn besteht.

3. Verfahren zur Herstellung der Eisenoxidrotpigmente gemäß einem der Ansprüche 1 oder 2, dadurch gekennzeichnet, daß auf Eisenoxidrotpigmenten eine Beschichtung farbloser Verbindungen eines oder mehrerer Elemente aus der Gruppe Mg, Zn, Al, La, Y, Zr, Sn, Ca durch Aufsprühen, Aufmahlen und/oder Auffällen so vorgenommen wird, daß der Gehalt an Elementen der Gruppe Mg, Zn, La, Y, Zr, Sn, Ca 0,5 bis 10 Mol-%, bezogen auf den Gesamteisengehalt der Eisenoxidrotpigmente, beträgt.

4. Verfahren gemäß Anspruch 3, dadurch gekennzeichnet, daß die Beschichtung durh Trocken- oder Naßmahlung aufgebracht wird.

5. Verfahren gemäß Anspruch 3, dadurch gekennzeichnet, daß die Beschichtung durch Auffällen mit zur Bildung schwerlöslicher farbloser Verbindungen erfolgt.

6. Verwendung der Eisenoxidrotpigmente gemäß einem oder mehreren der Ansprüche 1 bis 5 zur Einfärbung von Lacksystemen, Dispersionen, Kunststoffen und Baustoffen.

## Claims

1. Iron oxide red pigments having improved coloristic properties, the isoelectric point of the pigments being greater than 7 and preferably greater than 8, characterized in that they have a coating consisting of colourless compounds of one or more elements from the group consisting of Mg, Zn, Al, La, Y, Zr, Sn, Ca and the quantity in which the elements are present is from 0.5 to 10 mol-%, based on the total iron content of the iron oxide red pigments.

2. Iron oxide red pigments as claimed in claim 1, characterized in that the coating consists of poorly soluble compounds of Mg, Ca, Al and/or Zn.

3. A process for the production of the iron oxide red pigments claimed in claim 1 or 2, characterized in that a coating of colourless compounds of one or more elements from the group consisting of Mg, Zn, Al, La, Y, Zr, Sn, Ca is applied to iron oxide red pigments by spraying, grinding and/or precipitation in such a way that the content of elements from the group consisting of Mg, Zn, Al, La, Y, Zr, Sn, Ca is from 0.5 to 10 mol-%, based on the total iron content of the iron oxide red pigments.

4. A process as claimed in claim 3, characterized in that the coating is applied by dry or wet grinding.

5. A process as claimed in claim 3, characterized in that the coating is applied by precipitation with .. of forming poorly soluble colourless compounds.

6. The use of the iron oxide red pigments claimed in one or more of claims 1 to 5 for pigmenting paint systems, dispersions, plastics and building materials.

## Revendications

1. Pigments rouges d'oxyde de fer doués de très bonnes propriétés colorantes, et dont le point isoélectrique est supérieur à 7 et notamment supérieur à 8, caractérisés en ce qu'ils portent un revêtement qui est constitué de composés incolores d'un ou plusieurs éléments du groupe Mg, Zn, Al, La, Y, Zr, Sn, Ca et la quantité des éléments s'élève à 0,5-10 moles %, par rapport à la teneur totale en fer des piqments rouges d'oxyde de fer.

2. Pigments rouges d'oxyde de fer suivant la revendication 1, caractérisés en ce que le revêtement est constitué de composés difficilement solubles de Mg, Ca, Al et/ou Zn.

3. Procédé de production des pigments rouges à l'oxyde de fer suivant la revendication 1 ou la revendication 2, caractérisé en ce qu'un revêtement avec des composés incolores d'un ou plusieurs éléments du groupe Mg, Zn, Al, La, Y, Zr, Sn, Ca est effectué sur les pigments rouges d'oxyde de fer par application par pulvérisation, broyage et/ou précipitation de façon telle que la teneur en éléments du groupe Mg, Zn, La, Y, Zr, Sn, Ca s'élève à 0,5-10 moles % par rapport à la teneur totale en fer des pigments rouges d'oxyde de fer.

4. Procédé suivant la revendication 3, caractérisé en ce que le revêtement est appliqué par broyage par voie sèche ou par voie humide.

5. Procédé suivant la revendication 3, caractérisé en ce que le revêtement est effectué par précipitation avec des composés propres à former des composés incolores difficilement solubles.

6. Utilisation des pigments rouges d'oxyde de fer suivant une ou plusieurs des revendications 1 à 5 pour la coloration de peintures, de dispersions, de matières plastiques et de matériaux de construction.